# EUROPÄISCHE PATENTSCHRIFT

(11) **EP 2 960 217 B1**
(45) Veröffentlichungstag und Bekanntmachung des Hinweises auf die Patenterteilung: **07.12.2016**
(21) Anmeldenummer: 14174667.7
(22) Anmeldetag: 27.06.2014
(51) Int. Cl.: C03B 35/08, B65G 47/84

(54) **VORRICHTUNG ZUM UMLENKEN VON HEIßEN GLASWAREN**
DEVICE FOR DEFLECTING HOT GLASSWARE
DISPOSITIF DE CHANGEMENT DE DIRECTION DE VERRERIES CHAUDES

(43) Veröffentlichungstag der Anmeldung: 30.12.2015
(73) Patentinhaber: Ernst Pennekamp GmbH & Co. OHG, 58256 Ennepetal (DE)
(72) Erfinder: Zupp, Udo, 42119 Wuppertal (DE)
(74) Vertreter: Buse, Mentzel, Ludewig Patentanwaltskanzlei

(56) Entgegenhaltungen:
- WO-A1-2014/096588
- GB-A- 1 266 219
- US-A- 4 466 532
- US-A- 4 776 448

## Beschreibung

Die Erfindung betrifft eine Vorrichtung zum Umlenken von heißen Glaswaren. Solche Vorrichtungen finden insbesondere bei der Herstellung von Glasbehältern jeglicher Form, wie Flaschen, Gläser etc., Verwendung. Diese Glasbehälter werden geformt und dann auf ein Transportband gebracht, auf dem die Glaswaren hintereinander angeordnet sind. Als nächsten Bearbeitungsschritt müssen die Glaswaren in einen Entspannungsofen gebracht werden, um Spannungen im Glas, die sonst beim Abkühlen entstehen können, zu verhindern. Hierzu wird immer eine Reihe von Glaswaren von einem Schieber auf ein in den Ofen führendes Transportband bewegt. Um diese Bewegung zu ermöglichen, müssen die Glaswaren jedoch in ihrer Bewegungsrichtung vom Transportband um 90° verschwenkt und einem so genannten Querband zugeführt werden. Da die Waren immer noch heiß sind und die Fertigungsmaschinen mit hohen Stückzahlen arbeiten, ist dies jedoch schwierig.

Das größte Problem bei bestehenden Umlenksystemen besteht darin, dass die Glaswaren in einer Vielzahl von Größen und Formen hergestellt werden. Um diese sicher umlenken zu können, müssen verschiedene unterschiedliche Umlenksysteme zum Einsatz kommen. Wenn die Produktion auf eine andere Glasware umgestellt wird, muss das Umlenksystem entsprechend umgebaut werden. Diese Umbauten sind meistens langwierig und in einem schwer zugänglichen und extrem heißen Bereich der Produktion durchzuführen. Die langen Stilstandszeiten führen dabei zu einer schlechteren Produktivität. Häufig muss für den Umbau die ganze Umlenkeinheit ausgetauscht werden. Hierbei handelt es sich jedoch um eine schwere Vorrichtung, die nur mit Hilfe eines Krans entfernt und wieder zurück gebracht werden kann.

Darüber hinaus kann es vorkommen, dass eine Glasware nicht korrekt geformt wurde. Kommt eine derartige Glasware in das Umlenksystem und kommt sie mit den dort zur Führung der Glaswaren vorhandenen Fingern in Kontakt, kann es sein, dass der Finger sich verformt und ausgetauscht werden muss. Hierzu sind ebenfalls wieder lange Stillstandszeiten notwendig, um den deformierten Finger gegen einen korrekt funktionierenden Finger auszutauschen. Außerdem übertragen sich bei der Umlenkung, insbesondere bei hohen Stückzahlen, starke Schwingungen auf die Finger und somit auch auf die Glaswaren, so dass diese umfallen oder beschädigt werden können.

Das Dokument WO 2014/096588 A1 beschreibt eine Vorrichtung zum Gruppieren und Bewegen von Produkten. Hierzu sind Aufnahmeelemente vorgesehen, die aneinander befestigt und an einem Band festgelegt sind. Diese Vorrichtung ist für Glaswaren vorgesehen, die von ihren Abmessungen her eher klein sind. Ein Umbau auf größere Glaswaren, die beispielsweise einen Liter Volumen aufweisen, ist hier nicht vorgesehen.

Die US 4,466,532 beschreibt eine Vorrichtung zum Transport von heißen Glaswaren zwischen zwei Bearbeitungsstationen. Hierzu werden hitzeresistente Finger an einem Band angeordnet, über die eine geordnete Bewegung der Glaswaren erfolgen kann. Schwierig wird es jedoch, wenn anders geformte Glaswaren oder andere Stückzahlen befördert werden sollen. Hier muss dann ein größerer Umbau erfolgen, um die Vorrichtung entsprechend anzupassen.

In der GB 1 266 219 wird ein Umlenkmechanismus für Glaswaren beschrieben, bei welchem in gewissen Abständen Finger an einem Endlosband angeordnet sind. Die Vorrichtung umfasst ein Paar von Ritzeln, über die das Band angetrieben wird. Eines der Ritzel umfasst ein Überlastmodul, welches die Bewegung des Ritzels und damit des Bandes abschaltet, wenn die Last am Band zu hoch wird. Auch bei dieser Vorrichtung sind größere Umbaumaßnahmen erforderlich, wenn Glaswaren von ganz anderer Größe oder Form transportiert werden sollen.

Die US 4,776,448 beschreibt ebenfalls ein Umlenkband für Glaswaren mit einem umlaufenden Band, an welchem Finger vorgesehen sind, die die einzelnen Glaswaren bewegen. Die Finger werden über Gelenke an dem Band mitgeführt und mittels einer Steuerkurve verschwenkt. Diese Steuerkurve ist jedoch fest vorgegeben und kann nicht einfach ausgetauscht werden wenn Glaswaren einer anderen Form oder Größe bewegt werden sollen.

Aufgabe der Erfindung ist es daher, eine verbesserte Vorrichtung zur Umlenkung derartiger Glaswaren bereitzustellen, welche die vorgenannten Probleme vermeidet, effizienter arbeitet und langwierige Umbauphasen minimiert. Diese Aufgabe wird durch die kennzeichnenden Merkmale des Anspruches 1 gelöst, denen folgende besondere Bedeutung zukommt.

Jeder der Finger weist wenigstens ein Steuerkurvenlager auf, wobei die Vorrichtung ein Bodenelement und ein Deckelelement umfasst. Im Bodenelement und Deckelelement sind je eine Führungsnut für die Kette vorgesehen. Weiterhin umfassen das Bodenelement und/oder das Deckelelement je eine Steuerkurve für die Finger. Die Kette greift dabei jeweils in die Führungsnuten ein, wobei die Finger mit ihren Steuerkurvenlagern mit der oder den Steuerkurven am Deckelement bzw. am Bodenelement in Wirkverbindung stehen. Durch die doppelte Führung läuft die Kette sehr ruhig, so dass auch bei hohen Stückzahlen starke Schwingungen der Kette vermieden werden. Durch die Steuerkurve werden die Finger im Bereich des Auslaufes verschwenkt und geben die Glaswaren frei, sodass sie auf das Querband gelangen können. Besonders bevorzugt wird als Kette eine wartungsfreie, hochtemperaturbeständige Spezialkette verwendet, welche auch nicht geschmiert werden muss. Diese Kette kann verlängerte Bolzen aufweisen, um die Finger daran zu befestigen.

Um die Vorrichtung bei unterschiedlich großen und unterschiedlich geformten Glaswaren zu verwenden, müssen die Finger im Bereich des Auslaufs unterschiedlich verschwenkt werden, beispielsweise auch um eine Kollision eines Fingers mit eine am benachbarten Finger angeordneten Glasware zu vermeiden. Hierzu sind die Steuerkurven im Deckelelement und/oder im Bodenelement in auswechselbaren Steuerteilen angeordnet. Soll ein Umbau auf eine andere Glasware erfolgen, können diese Steuerteile sehr schnell und einfach ausgewechselt werden, um eine andere Schwenkbewegung der Finger zu ermöglichen. Es ist somit nicht nötig, die komplette Vorrichtung zu tauschen.

Vorzugsweise ist der Steuerteil manuell aus der Vorrichtung entfernbar. Hierzu muss lediglich eine entfernbare Lasche vom Steuerteil demontiert werden. Dies kann beispielsweise mittels eines herkömmlichen Schraubendrehers, Schraubenschlüssels oder eines anderen Handwerkzeuges geschehen. Der Steuerteil selbst ist dann einfach austauschbar. Hierdurch werden Umbauphasen deutlich verkürzt.

In einer bevorzugten Ausführungsform ist eine Kombikupplung vorgesehen, über die die Kette mit dem Antrieb verbindbar ist. Diese dient gleichzeitig als Rutschkupplung. Falls es zu einem Verklemmen von Glaswaren zwischen den Fingern kommt oder eine andere Blockade der Kette entsteht, wirkt die Kupplung als Rutschkupplung, um Beschädigungen an den Fingern oder der Kette zu verhindern. Besonders bevorzugt kann das Ein- und Auskuppeln der Kombikupplung manuell durchgeführt werden. Hierbei kann wieder eine Sicherung vorgesehen sein, die lösbar an der Kombikupplung befestigbar ist, um ein unbeabsichtigtes Betätigen zu verhindern. Die Sicherung kann ähnlich ausgeführt sein, wie die bereits beschriebene entfernbare Lasche am Steuerteil. Sie kann durch ein einfaches herkömmliches Handwerkzeug, wie beispielsweise einen Schraubendreher oder einen Schraubenschlüssel, in wenigen Handgriffen entfernbar sein, um die Kombikupplung zu betätigen. Besonders bevorzugt muss eine einzelne Schraube an der Sicherung gelöst werden, um die Kombikupplung betätigbar zu machen.

In einem weiteren bevorzugten Ausführungsbeispiel ist im Deckelelement und/oder im Bodenelement ein herausnehmbares Kettenführungselement vorgesehen, wobei im herausgenommenen Zustand des Kettenführungselementes die Kette derart zugänglich ist, dass die Finger entlang der Kette entnommen, ausgetauscht und/oder umgesetzt werden können. Hierdurch ist ein einfacher Umbau auf unterschiedliche Größen und Formen von Glaswaren durch Umsetzen oder Austauschen der Finger möglich. Bei unterschiedlich großen oder unterschiedlich geformten Glaswaren werden unterschiedliche Finger bzw. unterschiedliche Abstände von Fingern benötigt. Wird das Kettenführungselement herausgenommen, kann, falls vorhanden, auch die Kombikupplung ausgekuppelt werden und die Kette einfach manuell bewegt werden. Die Finger können dann entsprechend schnell ausgetauscht, umgesetzt usw. werden. Auch hierdurch werden Umbauphasen beschleunigt.

Bevorzugterweise sind die Finger einfach auf Vorsprünge und/oder Bolzen an der Kette aufsteckbar. Hierdurch sind sie einfach von der Kette entfernbar bzw. an dieser montierbar. Ein Werkzeug wird hierfür nicht benötigt.

Vorzugsweise weist jeder Finger eine großflächige Auflage auf, mit der er auf der Kette aufliegt. Hierdurch gewinnt der Finger an Stabilität und die Bewegungen des Fingers sind gleichmäßiger. Bevorzugterweise ist im Bereich der großflächigen Auflage des Fingers wenigstens eine Ausnehmung vorgesehen, durch die Bolzen, die an der Kette befindlich sind und nicht zur Befestigung dieses Fingers dienen, hindurchragen können. Somit kann der Finger auch in Längsrichtung der Kette über die breite Auflage verfügen, da die ansonsten störenden Bolzen einfach durch eine oder mehrere Ausnehmungen im Bereich der großflächigen Auflage hindurchragen und somit mit dem Finger an sich nicht in Berührung kommen, bzw. die Bewegung des Fingers nicht beeinträchtigen.

Empfehlenswerterweise weist jeder der Finger wenigstens ein Fingerführungslager und wenigstens ein Steuerkurvenlager auf. Am Fingerführungslager erfolgt die Führung des Fingers bzw. der ganzen Kette in der Führungsnut, während das Steuerkurvenlager die Steuerung und Bewegung des Fingers in Relation zur Kette, also zumeist eine Schwenkbewegung, durch die Steuerkurve ausführt. Vorzugsweise sind eines oder mehrere dieser Lager austauschbar, um bei Beschädigungen ausgewechselt werden zu können.

Es können eine automatische Kettenspanneinheit und/oder ein Kettendämpfungssystem vorgesehen sein. Beide Systeme können auch in einem einzigen Bauteil verwirklicht werden. Die Kettenspanneinheit sorgt dafür, dass auch bei thermischer Längung der Kette die Kette ihre Spannung nicht verliert. Das Kettendämpfungssystem nimmt Schwingungen, die durch die Bewegung in der Kette entstehen, auf und mildert diese ab.

Im laufenden Betrieb ist es vorteilhaft, ein Gehäuse vorzusehen, welches die Vorrichtung zumindest an drei Seiten umschließt. Lediglich die Seite der Vorrichtung, an der die Glaswaren an den Fingern geführt werden, ist von dem Gehäuse nicht umfasst. So sind keine beweglichen Teile direkt zugänglich, was wichtig für die Arbeitssicherheit ist. Unfälle, bei denen Personen mit schnell bewegten Teilen in Kontakt kommen, werden so vermieden. Vorzugsweise ist eine Klappe am Gehäuse vorgesehen, die das Kettenführungselement und/oder den Steuerteil leicht zugänglich macht, um auch bei einer derartig gekapselten Vorrichtung einen schnellen und zeitsparenden Umbau zu ermöglichen.

Bevorzugterweise ist die Vorrichtung um 180° um eine waagerecht angeordnete Achse drehbar. Das bisherige Deckenelement fungiert danach als Bodenelement und das bisherige Bodenelement als Deckenelement. So kann die selbe Vorrichtung für verschiedene Einsatzbereiche, auch für einen Rechts- oder Linkslauf, eingesetzt werden.

Die in der Vorrichtung verwendeten Finger können ganz oder teilweise aus einem Federstahl bestehen. Hierdurch weisen sie eine gewisse Elastizität auf, ohne sich schon bei geringen Belastungen plastisch zu verformen.

Weitere Vorteile und Ausführungsformen ergeben sich aus der nachfolgenden Beschreibung, den Unteransprüchen sowie den Zeichnungen. In den Figuren ist die Erfindung in einem Ausführungsbeispiel dargestellt. Es zeigen:
- Fig. 1:: eine erfindungsgemäße Vorrichtung, perspektivisch;
- Fig. 2:: die Vorrichtung aus Fig. 1 aus einer anderen Perspektive;
- Fig. 3:: ein Detail aus Fig. 2;
- Fig. 4:: ein Detail der Vorrichtung mit Kette und Glasware am Steuerteil;
- Fig. 5:: ein Teil der Vorrichtung am Steuerteil in Draufsicht;
- Fig. 6:: ein Steuerteil mit Finger und Glasware in Draufsicht;
- Fig. 7:: ein teilweise verschwenkter Finger kurz vor dem Austausch;
- Fig. 8:: das manuell befestigbare Kettenführungselement mit Kette und Fingern;
- Fig. 9:: das Deckelelement mit manuell entnehmbarem Steuerteil;
- Fig. 10:: der Steuerteil von unten;
- Fig. 11:: die erfindungsgemäße Vorrichtung in einem Gehäuse, perspektivisch.

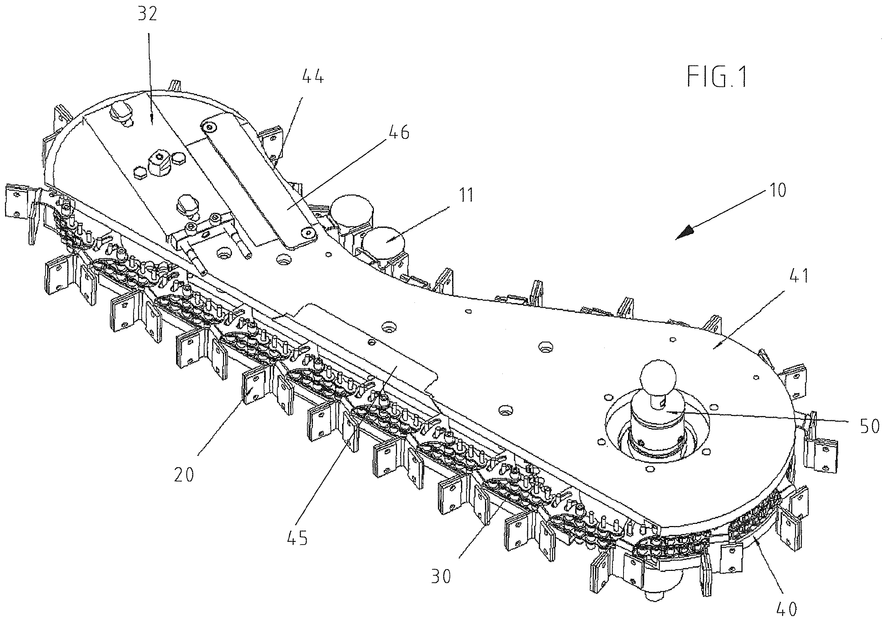

Fig. 1 zeigt die erfindungsgemäße Vorrichtung 10 in einer perspektivischen Darstellung von hinten oben. Exemplarisch sind zwei Glaswaren 11 gezeigt, die von zwei Fingern 20 geführt werden. Unterhalb der Vorrichtung 10 sind hier nicht dargestellte Bänder, die den Einlauf 12 und den Auslauf 13 bilden, vorgesehen. Auf diesen Bändern laufen die Glaswaren 11.

Man erkennt, dass die Vorrichtung ein Deckelelement 41 und ein Bodenelement 40 aufweist. Zwischen diesen beiden Elementen 40, 41 läuft eine umlaufende Kette 30. Sie ist im Deckelelement 41 und im Bodenelement 40 in jeweils einer Führungsnut 42 geführt. Außerdem ist eine kombinierte Kettenspanneinheit mit Kettendämpfungssystem 32 vorgesehen, welche thermische Längungen und Verkürzungen der Kette 30 ausgleicht und eine Bewegung bzw. eine Schwingung der Kette 30 dämpft. Des Weiteren erkennt man die Kombikupplung 50, welche als gleichzeitige Rutschkupplung ausgebildet ist. Die Kombikupplung 50 verbindet die Kette 30 mit einem Antrieb, um die Kette 30 zu bewegen. Außerdem sind noch das Kettenführungselement 45 und der Steuerteil 44 mit der Lasche 46 zu erkennen, auf welche später noch näher eingegangen werden wird.

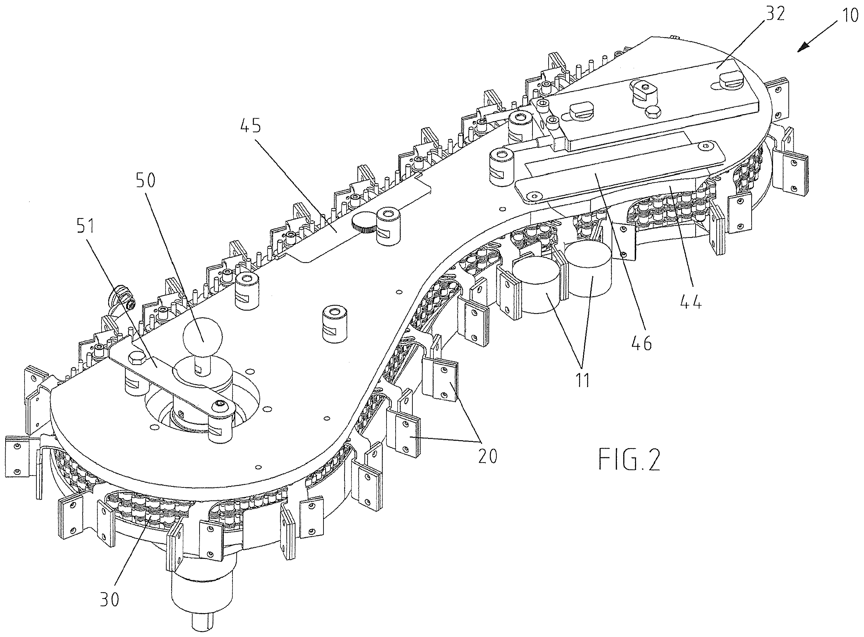

Fig. 2 zeigt die Vorrichtung 10 von der gegenüber Fig. 1 anderen Seite. Hier erkennt man noch besser, wie die Glaswaren 11 an den Fingern 20 geführt werden. Des Weiteren erkennt man, dass die Kombikupplung 50 durch eine Sicherung 51 gegen unbeabsichtigte Betätigung gesichert ist. Diese Sicherung 51 ist durch ein einfaches Werkzeug, hier durch einen Schraubenschlüssel, lösbar, um die Kombikupplung 50 zu betätigen. Das Lösen einer einzelnen Schraube ist ausreichend, um die Sicherung 51 so zu entfernen, dass die Kombikupplung 50 betätigbar ist.

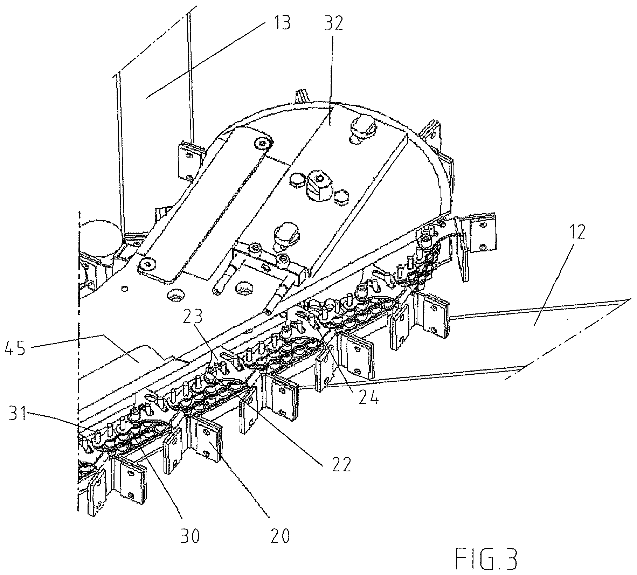

In Fig. 3 sind die Finger 20 näher dargestellt. Man erkennt, dass die Kette 30 Bolzen 31 aufweist, an denen die Finger 20 mittels eines Fingerführungslagers 22 gelagert und geführt sind. Darüber hinaus weisen die Finger 20 Ausnehmungen 24 auf, durch die weitere Bolzen 31 hindurchragen. Man erkennt auch den Einlauf 12, wobei hier nur noch der unter der Vorrichtung 10 hindurchgeführte Teil des Einlaufes 12 zu sehen ist. Im 90°-Winkel dazu angeordnet ist der Auslauf 13, auf dem die Glaswaren 11 dem Querband zugeführt werden, um dann in einen Entspannungsofen eingebracht zu werden.

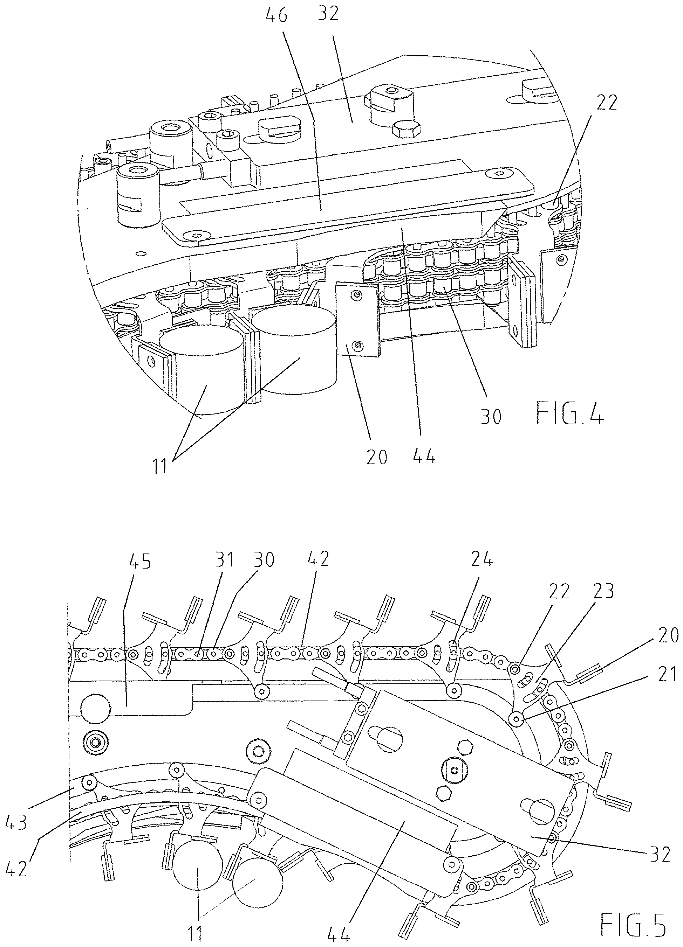

Die Fig. 4, 5 und 6 zeigen die nähere Funktionsweise der Finger 20 im Bereich des Auslaufes 13. Durch die Steuerkurve 43, welche im austauschbaren Steuerteil 44 angeordnet ist, werden im Bereich des hier nicht dargestellten Auslaufes 13 die Glaswaren 11 von den Fingern 20 durch Verschwenken dieser freigegeben. Hierzu weisen die Finger 20 neben dem Steuerkurvenlager 21 noch ein Fingerführungslager 22 auf. Beim Verschwenken der Finger 20 ist es wichtig, dass der eine Glasware 11 freigebende Finger 20 nicht mit der nächsten Glasware 11 am nächsten Finger 20 kollidiert. Um dies zu gewährleisten, müssen verschiedene Steuerkurven 43 für verschiedene Glaswaren 11 vorgesehen sein.

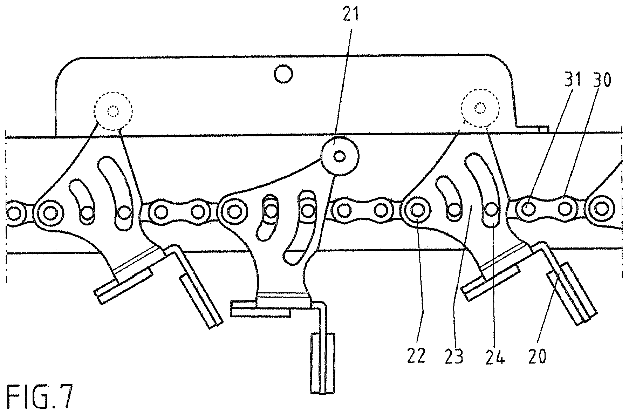

Einen Umbau oder Austausch der Finger 20 zeigt Fig. 7. Man erkennt, dass das Kettenführungselement 45 entfernt wurde, wodurch die Finger 20 einfach manuell nach außen verschwenkt werden können. In diesem Fall tritt das Steuerkurvenlager 21 außer Eingriff mit der Steuerkurve 43 und der jeweilige Finger 20 kann einfach entfernt werden. So können Finger 20 ausgetauscht werden oder auch die Abstände zwischen jeweils zwei Fingern 20 verändert werden. Wenn die Kombikupplung 50 ausgekuppelt ist, lässt sich die Kette 30 manuell bewegen und so ein Umbau bzw. ein Austausch von Fingern 20 schnell vornehmen.

Man erkennt auch, dass jeder der Finger 20 über eine großflächige Auflage 23 verfügt. Diese dient der Stabilität des jeweiligen Fingers 20. Damit diese großflächige Auflage 23 nicht mit benachbarten Bolzen 31 der Kette 30 kollidiert, sind Ausnehmungen 24 innerhalb der großflächigen Auflage 23 vorgesehen. Diese können von den Bolzen 31 der Kette 30 durchdrungen werden.

Das Fingerführungslager 22 sowie das Steuerkurvenlager 21 sind bei dieser Ausführungsform austauschbar, falls beispielsweise ein Lagerschaden an einem der Lager 21, 22 auftreten sollte.

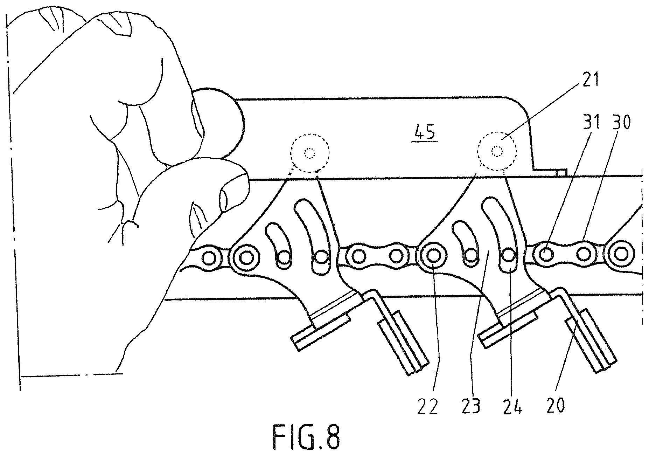

Fig. 8 zeigt, wie das Kettenführungselement 45 nach dem Umbau bzw. dem Austausch der Finger 20 wieder befestigt wird. Hierzu ist ein Rändelrad vorgesehen, welches einfach manuell ohne die Verwendung von Werkzeug bedienbar ist. Somit ist der Umbau bzw. der Austausch von Fingern 20 schnell durchführbar.

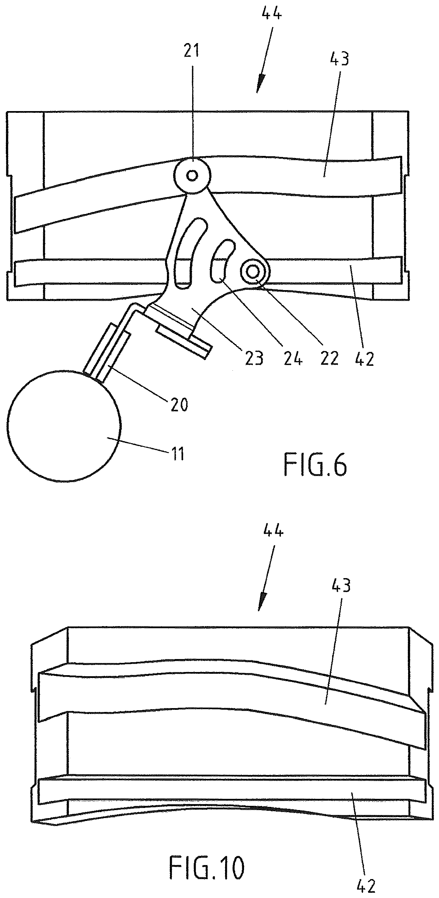

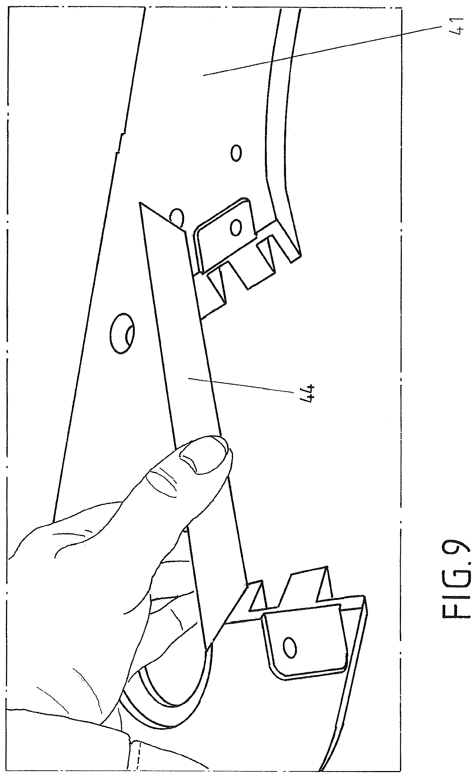

Aus den Fig. 9 und 10 wird der Austausch eines Steuerteiles 44 erkennbar. Dieser Steuerteil 44 kann einfach aus dem Deckelelement 41 oder auch aus einem Bodenelement 40 manuell entfernt werden und durch einen anderen Steuerteil 44 ersetzt werden. In jedem Steuerteil 44 sind sowohl eine Führungsnut 42 zur Führung der Kette 30 als auch eine Steuerkurve 43 für die Steuerung der Schwenkbewegung der Finger 20 vorgesehen. Um Kollisionen zwischen Fingern 20 und benachbarten Glaswaren 11 zu vermeiden, werden für verschieden große und verschieden geformte Glaswaren 11 verschiedene Steuerkurven 43 benötigt. Dadurch, dass nur ein einzelner Steuerteil 44 ausgetauscht werden muss, geht der Umbau in diesem Bereich sehr schnell von statten, sodass die Vorrichtung 10 nach kurzer Zeit wieder einsatzbereit ist.

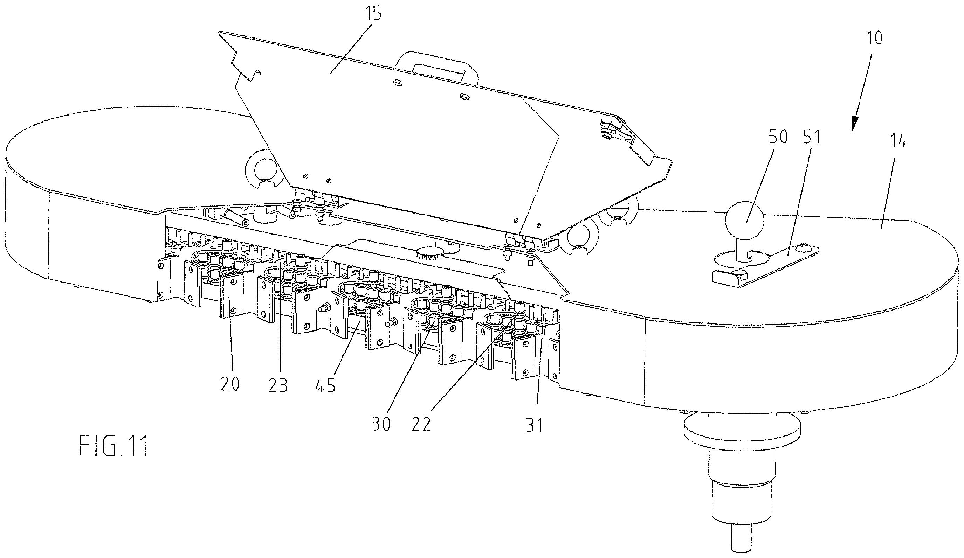

Fig. 11 zeigt nun nochmals die komplette Vorrichtung 10, hier mit einem Gehäuse 14. Das Gehäuse 14 ist aus Gründen des Arbeitsschutzes notwendig, damit keine schnell bewegten Teile offen zugänglich sind und somit Unfälle verursachen könnten. Man erkennt noch, dass die Kombikupplung 50 mit einer Sicherung 51 gegen unbeabsichtigte Betätigung gesichert ist. Hier muss lediglich eine einzelne Außensechskantschraube gelöst werden, um die Kombikupplung 50 betätigen zu können.

Um einen schnellen Umbau bzw. einen Austausch der Finger 20 zu ermöglichen, ist eine Klappe 15 vorgesehen, welche das Kettenführungselement 45 schnell zugänglich macht. Somit kann der Austausch von Fingern 20 oder der Umbau auf andere Arten von Glaswaren 11 schnell und unkompliziert erfolgen.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abwandlungen und Abänderungen möglich.

### Bezugszeichenliste:

- 10: Vorrichtung
- 11: Glasware
- 12: Einlauf
- 13: Auslauf
- 14: Gehäuse
- 15: Klappe
- 20: Finger
- 21: Steuerkurvenlager
- 22: Fingerführungslager
- 23: Großflächige Auflage
- 24: Ausnehmung
- 30: Kette
- 31: Bolzen
- 32: Kettenspanneinheit/Kettendämpfungssystem
- 40: Bodenelement
- 41: Deckelelement
- 42: Führungsnut
- 43: Steuerkurve
- 44: Steuerteil
- 45: Kettenführungselement
- 46: Lasche
- 50: Kombikupplung
- 51: Sicherung

## Patentansprüche

1. Vorrichtung (10) zum Umlenken von heißen Glaswaren (11),
wobei die Glaswaren (11) an einem Einlauf (12) in die Vorrichtung (10) hinein führbar sind,
wobei die Vorrichtung (10) mehrere Finger (20) aufweist zur Führung einzelner Glaswaren (11),
mit einer umlaufenden Kette (30), die an der Vorrichtung (10) entlang geführt ist und an der die Finger (20) schwenkbar befestigt sind, wobei die Finger (20) für unterschiedliche Glaswaren (11) unterschiedlich anordnenbar sind
und wobei die Glaswaren (11) mittels der Vorrichtung (10) einem Auslauf (13) zuführbar sind, der etwa in einem 90°-Winkel zum Einlauf (12) verläuft,
wobei jeder der Finger (20) wenigstens ein Steuerkurvenlager (21) aufweist,
und ein Bodenelement (40) und ein Deckelelement (41) vorgesehen sind, welche je eine Führungsnut (42) für die Kette (30) aufweisen
wobei das Bodenelement (40) und/oder das Deckelelement (41) eine Steuerkurve (43) für die Finger (20) aufweisen
und wobei die Finger (20) mit ihrem oder ihren Steuerkurvenlagern (21) in die Steuerkurven (43) am Deckelelement (41) bzw. am Bodenelement (40) eingreifen
**dadurch gekennzeichnet,**
**dass** die Steuerkurven (43) an einem auswechselbaren Steuerteil (44) im Bereich des Auslaufes (13) angeordnet sind.

2. Vorrichtung (10) nach Anspruch 1, **dadurch gekennzeichnet, dass** der Steuerteil (44) einfach manuell aus der Vorrichtung (10) entfernbar ist, wobei er durch eine entfernbare Lasche (46) sicherbar ist.

3. Vorrichtung (10) nach einem der Ansprüche 1 bis 2, **dadurch gekennzeichnet, dass** eine Kombikupplung (50) vorgesehen ist, über die die Kette (30) mit einem Antrieb verbindbar ist und die gleichzeitig als Rutschkupplung ausgebildet ist.

4. Vorrichtung (10) nach Anspruch 3, **dadurch gekennzeichnet, dass** das Einkuppeln und Auskuppeln der Kombikupplung (50) manuell durchführbar ist.

5. Vorrichtung (10) nach einem der Ansprüche 3 oder 4, **dadurch gekennzeichnet, dass** eine Sicherung (51) vorgesehen ist, die lösbar an der Kombikupplung (50) befestigbar ist, um ein unbeabsichtigtes Betätigen der Kombikupplung (50) zu verhindern.

6. Vorrichtung (10) einem der Ansprüche 1 bis 5, **dadurch gekennzeichnet, dass** im Deckelelement (40) und/oder im Bodenelement (41) ein herausnehmbares Kettenführungselement (45) vorgesehen ist, wobei im herausgenommenen Zustand des Kettenführungselementes (45) die Kette (30) derart zugänglich ist, dass die Finger (20) entlang der Kette (30) entnommen, ausgetauscht und/oder umgesetzt werden können.

7. Vorrichtung (10) nach einem der Ansprüche 1 bis 6, **dadurch gekennzeichnet, dass** die Finger (20) einfach auf Vorsprünge und/oder Bolzen (31) an der Kette (30) aufsteckbar sind.

8. Vorrichtung (10) nach einem der Ansprüche 1 bis 7, **dadurch gekennzeichnet, dass** jeder der Finger (20) eine großflächige Auflage (23) aufweist, mit der er auf der Kette (30) aufliegt.

9. Vorrichtung (10) nach Anspruch 8, **dadurch gekennzeichnet, dass** die Finger (20) im Bereich der großflächigen Auflage (23) über Ausnehmungen (24) verfügen, durch die Bolzen (31), die nicht zur Befestigung des Fingers (20) Verwendung finden, hindurch ragen können.

10. Vorrichtung (10) nach einem der Ansprüche 1 bis 9, **dadurch gekennzeichnet, dass** jeder der Finger (20) wenigstens ein Fingerführungslager (22) und mindestens ein Steuerkurvenlager (21) aufweist, wobei vorzugsweise eines oder mehrere dieser Lager (21, 22) austauschbar sind.

11. Vorrichtung (10) nach einem der Ansprüche 1 bis 10, **dadurch gekennzeichnet, dass** eine automatische Kettenspanneinheit und/oder ein Kettendämpfungssystem (32) vorgesehen sind.

12. Vorrichtung (10) nach einem der Ansprüche 1 bis 11, **dadurch gekennzeichnet, dass** ein Gehäuse (14) vorgesehen ist, welches die Vorrichtung (10) zumindest an drei Seiten umschließt, wobei vorzugsweise eine Klappe (15) am Gehäuse (14) vorgesehen ist, die das Kettenführungselement (45) leicht zugänglich macht.

13. Vorrichtung (10) nach einem der Ansprüche 1 bis 12, **dadurch gekennzeichnet, dass** die Vorrichtung (10) um 180° um eine waagerecht angeordnete Achse drehbar ist, wobei nach der Drehung das bisherige Deckelelement (41) als Bodenelement (40) fungiert und das bisherige Bodenelement (40) als Deckelelement (41) dient.

14. Vorrichtung (10) nach einem der Ansprüche 1 bis 13, **dadurch gekennzeichnet, dass** die Finger (20) ganz oder teilweise aus einem Federstahl bestehen.

## Claims

1. Device (10) for deflecting hot glassware (11),
whereby, the glassware (11) can be inserted into the device (10) on an inlet,(12),
whereby, the device (10) features multiple fingers (20) to guide the individual glassware (11),
with a continuous chain (30) which is routed along the device (10) and is attached to the fingers (20) so that it can be swivelled, whereby, the fingers (20) are arranged for different glassware (11)
and whereby, the glassware (11) an outlet (13), which runs at approximately a 90° angle to the inlet (12), can be fed using the device (10),
whereby, each of the fingers (20) features at least one control cam bearing (21),
and provided with a base element (40) and a cover element (41), which each feature a guide groove (42) for the chain (30)
whereby, the base element (40) and/or the cover element (41) features a control cam (43) for the fingers (20) and, whereby, the fingers (20) engage with their control cam bearings (21) in the control cams (43) on the cover element (41) and on the base element (40)
**characterized in that,**
the control cams (43) are arranged on a replaceable control part (44) in the area of the outlet (13).

2. A device (10) in accordance with claim 1, **characterized in that** the control part (44) can be easily removed manually from the device (10), whereby, it can be secured by a removable strap (46).

3. A device (10) in accordance with one of the claims 1 to 2, **characterized in that** a combination coupling (50) is provided, through which the chain (30) is connected to a drive and, simultaneously, is formed as a slip clutch.

4. A device (10) in accordance with claim 3, **characterized in that** coupling and uncoupling of the combination coupling (50) is carried out manually.

5. A device (10) in accordance with one of the claims 3 or 4, **characterized in that** a safety device (51) is provided, which is attached to the combination coupling (50) and can be removed, in order to prevent unintentional activation of the combination coupling (50).

6. A device (10) in accordance with one of the claims 1 to 5, **characterized in that** a removable chain-guide element (45) is provided in the cover element (40) and/or in the base element (41), whereby, in the removed condition of the chain-guide element (45), the chain (30) is accessible so that the fingers (20) along the chain (30) can be removed, replaced and/or transposed.

7. A device (10) in accordance with one of the claims 1 to 6, **characterized in that** the fingers (20) are easily placed on protrusions and/or bolts (31) on the chain (30).

8. A device (10) in accordance with one of the claims 1 to 7, **characterized in that** each of the fingers (20) features a large contact area (23) with which it rests on the chain (30).

9. A device (10) in accordance with claim 8, **characterized in that** the fingers (20) in the area of the large contact area (23) has recesses (24), through which the bolts (31) that are not used to attached the fingers (20) can protrude through.

10. A device (10) in accordance with one of the claims 1 to 9, **characterized in that** each of the fingers (20) features a minimum of one finger-guide bearing (22) and a minimum of one control cam bearing (21), whereby, one or more of these bearings (21, 22) are interchangeable.

11. A device (10) in accordance with one of the claims 1 to 10, **characterized in that** an automatic chain tensioning unit and/or a chain damping system (32) are/is provided.

12. A device (10) in accordance with one of the claims 1 to 11, **characterized in that** a housing (14) is provided which encloses the device (10) at least on three sides, whereby, it is preferred that a flap (15) is provided on the housing (14) which permits easy access to the chain-guide element (45).

13. A device (10) in accordance with one of the claims 1 to 12, **characterized in that** the device (10) is arranged so that it can be rotated through 180° around a horizontally arranged axis, whereby, after rotation of the previous cover element (41), functions as a base element (40) and the previous base element (40) is used as a cover element (41).

14. A device (10) in accordance with one of the claims 1 to 13, **characterized in that** the fingers (20) fully or partly comprise of spring steel.

## Revendications

1. Dispositif (10) de changement de direction de verreries chaudes (11),
sachant que les verreries (11) peuvent être introduites dans le dispositif (10) au niveau d'une entrée (12),
sachant que le dispositif (10) présente plusieurs doigts (20) pour guider les verreries (11) individuelles,
comprenant une chaîne (30) circulant en circuit fermé, guidée le long du dispositif (10) et contre laquelle les doigts (20) sont fixés de façon pivotante, sachant que les doigts (20) sont agençables différemment en fonction des différentes verreries (11)
et sachant que les verreries (11) peuvent être amenées vers une sortie (13) au moyen du dispositif (10), sortie qui présente un tracé en angle de 90° par rapport à l'entrée (12),
sachant que chacun des doigts (20) présente au moins un palier (21) de came de commande,
et qu'un élément de fond (40) et un élément couvercle (41) sont prévus, qui présentent chacun une rainure de guidage (42) pour la chaîne (30), sachant que l'élément de fond (40) et/ou l'élément couvercle (41) présentent une came de commande (43) pour les doigts (20) et sachant que les doigts (20) engrènent par leur ou leurs palier(s) (21) de came de commande dans les cames de commande (43) contre l'élément couvercle (41) et contre l'élément de fond (40),
**caractérisé en ce que**
les cames de commande (43) sont agencées contre une pièce de commande (44) interchangeables dans la zone de la sortie (13).

2. Dispositif (10) selon la revendication 1, **caractérisé en ce que** la pièce de commande (44) peut être retirées manuellement avec facilité du dispositif (10), sachant qu'elle est sécurisable au moyen d'une patte (46) amovible.

3. Dispositif (10) selon l'une des revendications 1 ou 2, **caractérisé en ce qu'**est prévu un accouplement combiné (50) via lequel la chaîne (30) est reliable à un entraînement, et qui est simultanément configuré comme accouplement à friction.

4. Dispositif (10) selon la revendication 3, **caractérisé en ce que** l'embrayage et le débrayage de l'accouplement combiné (50) sont réalisables manuellement.

5. Dispositif (10) selon l'une des revendications 3 ou 4, **caractérisé en ce qu'**est prévu un dispositif de sécurisation (51) qu'il est possible de fixer de façon amovible contre l'accouplement combiné (50) pour empêcher un. actionnement involontaire de l'accouplement combiné (50).

6. Dispositif (10) selon l'une des revendications 1 à 5, **caractérisé en ce que** dans l'élément couvercle (40) et/ou dans l'élément de fond (41) est prévu un élément (45) amovible de guidage de chaîne, sachant que lorsque l'élément (45) de guidage de chaîne est extrait, la chaîne (30) est accessible de telle sorte que les doigts (20) peuvent être retirés, échangés et/ou changés de place le long de la chaîne (30).

7. Dispositif (10) selon l'une des revendications 1 à 6, **caractérisé en ce que** les doigts (20) sont enfichables simplement sur des saillies et/ou des goujons (31) sur la chaîne (30).

8. Dispositif (10) selon l'une des revendications 1 à 7, **caractérisé en ce que** chaque doigt (20) présente une garniture (23) d'une grande surface par laquelle il appuie sur la chaîne (30).

9. Dispositif (10) selon la revendication 8, **caractérisé en ce que** les doigts (20) disposent, dans la zone de la grande surface d'applique (23); d'évidements (24) à travers lesquels peuvent faire saillie les goujons (31) qui ne servent pas à fixer le doigt (20).

10. Dispositif (10) selon l'une des revendications 1 à 9, **caractérisé en ce que** chaque doigt (20) présente au moins un palier (22) de guidage du doigt et au moins un palier (21) de came de commande, sachant que de préférence un ou plusieurs de ces paliers (21, 22) sont interchangeables.

11. Dispositif (10) selon l'une des revendications 1 à 10, **caractérisé en ce que** sont prévus une unité de tensionnement automatique de chaîne et/ou un système (32) amortisseur de chaîne.

12. Dispositif (10) selon l'une des revendications 1 à 11, **caractérisé en ce qu'**est prévu un boîtier (14) qui entoure le dispositif (10) sur au moins trois côtés, sachant qu'est prévue de préférence une trappe (15) contre le boîtier (14), laquelle rend l'élément (45) de guidage de chaîne facilement accessible.

13. Dispositif (10) selon l'une des revendications 1 à 12, **caractérisé en ce que** le dispositif (10) peut tourner à 180° autour d'un axe agencé à l'horizontale, sachant qu'après la rotation l'élément (41) qui jusqu'à présent officiait de couvercle officie maintenant d'élément de fond (40), et que l'élément (40) qui jusqu'à présent officiait de fond officie maintenant d'élément couvercle (41).

14. Dispositif (10) selon l'une des revendications 1 à 13, **caractérisé en ce que** les doigts (20) sont entièrement ou partiellement en acier à ressort.
